# EUROPÄISCHE PATENTSCHRIFT

(11) **EP 2 394 150 B1**
(45) Veröffentlichungstag und Bekanntmachung des Hinweises auf die Patenterteilung: **22.06.2016**
(21) Anmeldenummer: 10702698.1
(22) Anmeldetag: 08.02.2010
(51) Int. Cl.: G01K 7/22, G01K 7/24

(54) **HALBLEITER-TEMPERATURSENSOR MIT ESD-SCHUTZ**
SEMICONDUCTOR TEMPERATURE SENSOR WITH ESD PROTECTION
CAPTEUR DE TEMPÉRATURE À SEMICONDUCTEUR AVEC PROTECTION CONTRE LES DÉCHARGES ÉLECTROSTATIQUES

(30) Priorität: 09.02.2009 DE 202009001611 U
(43) Veröffentlichungstag der Anmeldung: 14.12.2011
(73) Patentinhaber: EPHY-MESS Gesellschaft für elektro-physikalische Messgeräte mbH, 65205 Wiesbaden-Delkenheim (DE)
(72) Erfinder: HIX, Werner, 64807 Dieburg (DE)
(74) Vertreter: WSL Patentanwälte Partnerschaft mbB
(86) Internationale Anmeldenummer: PCT/EP2010/051492
(87) Internationale Veröffentlichungsnummer: WO 2010/089390

(56) Entgegenhaltungen:
- EP-A2- 1 965 185
- WO-A1-2009/141266
- DE-A1-102008 043 047
- DE-U1- 29 808 365
- JP-A- 2002 141 208
- JP-A- 2002 252 103

## Beschreibung

Diese Erfindung betrifft einen Temperatursensor mit einem Halbleiter-Sensorelement mit mindestens zwei Anschlussleitungen.

Solche Temperatursensoren werden in der Industrie vielfach eingesetzt. Ein möglicher Anwendungsfall ist die Überwachung der Temperatur von Elektromotoren, insbesondere des Stators. Dazu werden solche Sensoren in eine Statornut eingelegt oder am Wickelkopf angebracht. Sie ermöglichen eine Sicherheitsabschaltung bei Überhitzung der Motoren.

Die Halbleiter-Sensorelemente haben dabei in der Ausführung als KTY-Typ einen Widerstand von typischerweise 600 Ω bis 2 kΩ. Halbleiter-Sensorelemente sind jedoch sehr empfindlich gegenüber Spannungspitzen, wie sie beispielsweise durch elektrostatische Entladungen (ESD, Electrostatic Discharge) entstehen können. Halbleiterbasierte Sensorelemente haben im Allgemeinen nur eine eine typabhängige, begrenzte ESD-Festigkeit. Bei einer Schädigung durch höhere Spannungen wird, häufig ohne dass dies anhand der bei Zimmertemperatur zu messenden Parameter erkennbar ist, der Sensor vorgeschädigt und z. B. die Sensorkennlinie derart verändert, daß eine für den Anwendungszweck hinreichend genaue Temperaturmessung unmöglich wird.

Eine Schädigung durch elektrostatische Entladungen geschieht seltener im Betrieb und nach dem Einbau des Sensors, sondern wird eher bei der Konfektionierung und beim Einbau der Sensoren in ihre Meßstelle vorkommen. Herstellung, Handhabung, Transport, Verpackung und Einbau sind besonders kritisch, da hierbei die blanken Anschlußdrähte der Temperatursensoren sehr leicht und auch unabsichtlich von Personen berührt werden können. Der Körper eines Menschen kann sich, abhängig von den Umgebungsbedingungen, bei alltäglichen Aktivitäten bis auf 25 kV aufladen, die bei Berührung eines elektrisch leitfähigen Bauteils zu einem kurzzeitigen Stromfluß von mehr als 30 A führen können. Dieser Strom fließt typischerweise für etwa 1-10 ns.

Im Stand der Technik ist es bekannt, solche Halbleiter-Sensorelemente zum Beispiel mit Hilfe von Kondensatoren und/oder Dioden zu schützen. Solche Schutzelemente werden zu dem Halbleiter-Sensorelement parallel geschaltet, um auftretende Spannungs- und Stromspitzen abzumildern bzw. abzuleiten, bevor sie den Halbleitersensor erreichen können. Im Falle des ESD-Schutzes mit Kondensatoren steigt die Spannung an Kondensator und Halbleiter-Sensorelement in Abhängigkeit der injizierten Ladungsmenge an, was bei großen injizierten Ladungsmengen und kleinen Kapazitäten dennoch eine Überlastung des Halbleiter-Sensorelementes oder des Kondensators verursachen kann, da für Kondensatoren keine maximale Ausgangsspannung spezifiziert werden kann. Bei ESD-Schutz mit Schutzdioden wird die Spannung an dem Halbleiter-Sensorelement im wesentlichen auf eine Schutzspannung begrenzt. Als Schutzdiode können beispielsweise Zenerdioden oder Suppressordioden eingesetzt werden. Diese werden meist paarweise gegeneinander verschaltet, um eine Ableitung in beide Richtungen zu ermöglichen. Die zulässige kurzfristige Leistung solcher Bauteile ist jedoch auf ca. 5 kW begrenzt, weshalb die Dioden von starken ESD-Impulsen ihrerseits beschädigt werden können. Sie bieten deshalb keinen sicheren Schutz vor elektrostatischen Entladungen, die kurzzeitig sehr viel höhere Leistungen bis zu 750 kW aufweisen können.

Im ESD-Schutz ist grundsätzlich auch der Einsatz von Varistoren bekannt (siehe z.B. EP 1 440 320), jedoch werden diese bisher aufgrund ihrer Temperaturempfindlichkeit in Temperatursensoren mit einem Messbereich über 100°C hinausgehenden Bereich nicht zum Schutz von Halbleiter-Sensorelementen eingesetzt.

Ein Temperatursensor für den Einsatz bei höheren Temperaturen, der zwei Anschlussleitungen aufweist, ist aus der EP 1 965 185 bekannt. Als Temperatursensor ist dabei jedoch ein temperaturabhängiger elektrischer Widerstand, insbesondere ein Platinwiderstand vorgesehen, der im Allgemeinen keinen ESD-Schutz benötigt.

Aus der DE 298 08 365 U1 ist ein Hochspannungsschutzschaltkreis für ein Messgerät bekannt. Dieser Schutzschaltkreis weist neben anderen Elementen unter anderem auch einen Varistor auf, der die Eingangsleitungen überbrückt.

Vor diesem Hintergrund ist es Aufgabe der vorliegenden Erfindung, einen Temperatursensor bereitzustellen, der einen verbesserten Schutz gegen ESD hat und gleichzeitig eine hohe Temperaturfestigkeit aufweist.

Diese Aufgabe wird durch ein Halbleiter-Sensorelement gemäß Anspruch 1 gelöst, wobei dem Halbleiter-Sensorelement ein die Anschlußleitungen überbrückender Varistor parallel geschaltet ist.

Durch den Einsatz eines Varistors wird ein sehr guter ESD-Schutz für das Halbleiter-Sensorelement gewährleistet. Varistoren haben Ansprechzeiten von weniger als 1 ns, was deutlich kürzer ist, als die Ansprechzeiten von Zenerdioden oder Supressordioden. Herkömmlichen Kondensatoren sind sie im Ansprechverhalten weit überlegen, da diese stets einen Tiefpaß mit den Leitungswiderständen und ihrem Innenwiderstand bilden, so daß die Ableitungseigenschaften für höhere Frequenzen deutlich schlechter sind.

In einer Ausführungsform ist das Halbleiter-Sensorelement ein SMD-Element (SMD = service mounted device) und ist auf einer Leiterplatte angeordnet.

Durch diese Bauweise kann der Temperatursensor sehr klein ausgeführt werden. Die Leiterplatte ist zweckmäßig, um das SMD-Element auf einfache Weise direkt und zugentlastet darauf zu kontaktieren. Die Anschlußleitungen können an die Leiterplatte leicht durch Lötverbindungen angeschlossen werden.

Der Varistor ist in einem Abstand von mindestens 20 mm von dem Halbleiter-Sensorelement angeordnet.

Je nach Anwendungsfall kann der Temperatursensor aufgrund dieses Abstandes auch für höhere Temperaturen als die zulässige Betriebstemperatur des Varistors eingesetzt werden, wenn der Varistor dadurch in einen Bereich gelangt, in dem die Temperatur im Betrieb unterhalb der Temperatur am Ort des Halbleiter-Sensorelements liegt. Vorteilhaft hat der Varistor dabei einen solchen Abstand von dem Halbleiter-Sensorelement, dass die Temperatur an dem Varistor 150°C, vorzugsweise 125°C und noch mehr bevorzugt 85°C nicht überschreitet. Je höher die zu messende Temperatur des Objektes im Bereich des Halbleiter-Sensorelements ist, desto weiter davon entfernt wird der Varistor zweckmäßigerweise angeordnet.

Jede der Anschlußleitungen des Temperatursensors umfasst jeweils mindestens zwei Anschlußleitungsabschnitte mit einer elektrischen Isolierung, wobei die Leitungsabschnitte jeweils elektrisch miteinander verbunden sind und vor allem dadurch als zwei Abschnitte definiert sind, dass ihre elektrische Isolierung wenigstens am Übergang von dem einen Anschlußleitungsabschnitt zum anderen unterbrochen ist und jeweils ein Anschluss des Varistors an einer Stelle ohne elektrische Isolierung an jeweils einer der Anschlußleitungen elektrisch angeschlossen ist.

Auf diese Weise kann der Varistor an einer beliebigen Position entland der Länge der Anschlußleitungen mit diesen verbunden werden. Dies kann erforderlich sein, um den Varistor in ausreichendem Abstand von dem Halbleiter-Sensorelement und dem Bereich des zu messenden Objekts, der eine höhere Temperatur als die zulässige Betriebstemperatur des Varistors hat, anzuschließen. Leiterbahnen auf einer Leiterplatte können ebenfalls ein Teil der Anschlußleitungen sein. Die Anschlussleitungen haben typischerweise eine Gesamtlänge von bis zu 500 mm oder auch darüber.

In einer weiteren Ausführungsform ist der Varistor ein SMD-Element und ist auf einer Leiterplatte angeordnet, wobei die Leiterplatte mit wenigstens zwei Anschlußleitungsabschnitten jeder Anschlussleitung verbunden ist und der Varistor mit jeweils einem seiner Anschlüsse mit jeweils einer der Anschlußleitungen bzw. Leiterbahnen auf der Platine direkt elektrisch verbunden ist.

Auf diese Weise kann der Varistor als ein sehr kleines Bauelement ausgeführt werden, und ist über die Leiterplatte leicht mit den weiteren Anschlußleitungsabschnitten verbindbar. Die Leiterbahnen der Leiterplatte stellen dabei eine Verbindung zwischen den übrigen Anschlußleitungsabschnitten dar.

In einer weiteren Ausführungsform sind der Varistor (2) und das Halbleiter-Sensorelement (1) in einem Abstand von weniger als 20 mm auf einer gemeinsamen Leiterplatte angeordnet.

Auf diese Weise kann die Größe des Temperatursensors weiter verringert werden. Dabei muss allerdings in Kauf genommen werden, dass das Halbleiter-Sensorelement und der Varistor im Wesentlichen der gleichen Temperatur ausgesetzt werden, wodurch der Meßbereich des Temperatursensors auf die Einsatztemperatur des Varistors begrenzt wird.

In einer weiteren Ausführungsform ist der Temperatursensor an dem Ende, an dem sich das Halbleiter-Sensorelement befindet, von einer im wesentlichen rohr- oder schlauchförmigen Umhüllung umgeben, in deren Inneren das Halbleiter-Sensorelement angeordnet ist.

Eine solche Schutzhülle bietet einen mechanischen Schutz für das Halbleiter-Sensorelement. Vorteilhaft weist die rohrförmige Schutzhülle einen oder mehrere Schrumpfschläuche auf.

Dabei soll der Begriff "Rohr- oder schlauchförmige Schutzhülle" auch metallische Hülsen, Hartgewebestreifen, Schraubgehäuse und Kunststoffgehäuse umfassen.

In einer weiteren Ausführungsform sind die Verbindungsstellen des Halbleiter-Elementes mit den Anschlussleitungen innerhalb der erwähnten Schutzhülle bzw. Umhüllung des Halbleiter-Sensorelements angeordnet.

Dadurch sind die empfindlichen Verbindungsstellen mechanisch geschützt, und setzen insbesondere einem Knicken oder Biegen einen größeren Widerstand entgegen. Durch diese Versteifung wird sowohl Beschädigungen beim Einbau als auch Schäden durch Schwingungen im Betrieb vorgebeugt.

In einer weiteren Ausführungsform ist der Varistor innerhalb der Umhüllung angeordnet.

Auf diese Weise ist auch der Varistor mechanisch und elektrisch geschützt.

In einer weiteren Ausführungsform ist der Varistor außerhalb der Umhüllung angeordnet.

Letzteres kann zweckmäßig sein, wenn aufgrund hoher Temperaturen der Varistor entfernt von dem Halbleiter-Sensorelement angeordnet werden muss und die Umhüllung des Halbleiter-Sensorelements nicht so weit entlang der Anschlußleitungen ausgedehnt ist, dass der Varistor ebenfalls von ihr umfasst wird. Der Varistor kann jedoch davon unabhängig zu seinem Schutz eine eigene Umhüllung aufweisen.

In einer weiteren Ausführungsform sind die Anschlüsse des Halbleiter-Sensorelements durch Crimpverbindungen mit den Anschlußleitungen verbunden.

Crimpverbindungen sind für den Temperatursensor nach der Erfindung zweckmäßig, weil sie eine hohe Temperaturbeständigkeit aufweisen. Standard-Lote schmelzen schon bei etwa 215° C oder darunter, was den Temperaturbereich begrenzen würde. Hochtemperaturlote sind häufig schwieriger zu verarbeiten. Darüber hinaus hat eine Crimpverbindung eine ausgezeichnete Ausfallsicherheit, die die von Lotverbindungen deutlich übertrifft.

In einer weiteren Ausführungsform weist der Varistor eine Temperaturbeständigkeit bis mindestens 150°C auf.

Der Einsatz von Varistoren in Temperatursensoren, insbesondere in Temperatursensoren, die zur Motorüberwachung konzipiert sind, wird durch einen speziellen Varistortyp ermöglicht, der bis mindestens 150°C temperaturbeständig ist. Dadurch wird ein Einsatz zumindest in minder hoch belasteten Motoren ermöglicht. Durch seine innere Struktur mit vielfachen Übergangskontakten bietet ein Varistor außerdem eine sehr hohe Zuverlässigkeit auch bei wiederholten Belastungen. Dadurch, dass Varistoren bidirektional arbeiten, ist nur ein Varistor erforderlich, um einen Schutz gegen ESD-Entladungen auf jeder der Anschlußleitungen zu bewirken.

Gemäß einer Ausführungsform ist vorgesehen, dass das Halbleiter-Sensorelement ein KTY-Sensorelement ist.

Die Halbleiter-Sensorelemente von Typ KTY (Sensorelement auf Siliziumbasis) haben eine gute Empfindlichkeit und Messgenauigkeit und sie sind zu vertretbaren Kosten erhältlich.

Weitere Vorteile, Merkmale und Anwendungsmöglichkeiten der Erfindung ergeben sich sowohl aus der folgenden Beschreibung bevorzugter Ausführungsformen, als auch aus der zugehörigen Figur. Es zeigt:

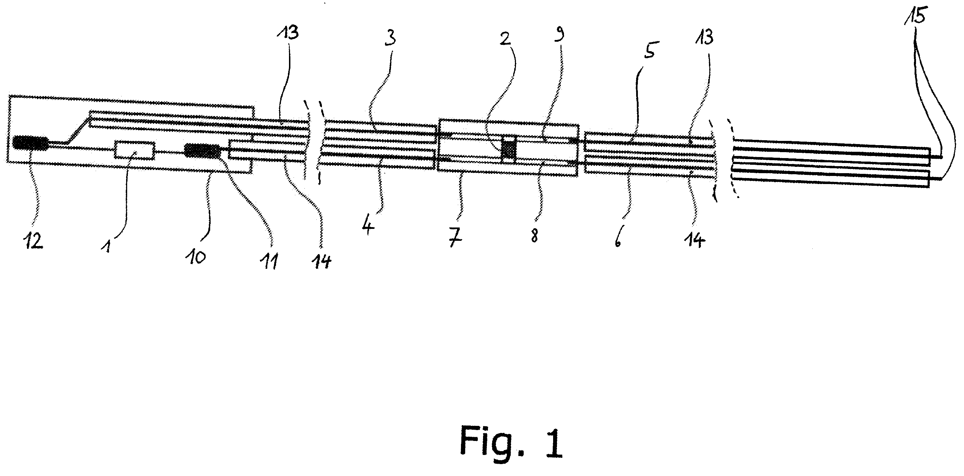

Figur 1 einen Temperatursensor nach der Erfindung im Querschnitt.

In Figur 1 ist ein Temperatursensor nach der Erfindung dargestellt. Man erkennt zwei Anschlußleitungen, die jeweils in zwei Anschlußleitungsabschnitte 3 und 5 bzw. 4 und 6 unterteilt sind. Die Anschlußleitungen sind jeweils von einer Isolierung 13 bzw. 14 umgeben. Zwischen je zwei Anschlußleitungsabschnitten ist eine Leiterplatte 7 angeordnet, auf der zwei Leiterbahnen 8 und 9 angeordnet sind. Mit den Leiterbahnen 8 bzw. 9 sind jeweils die Anschlußleitungsabschnitte 4 und 6 bzw. 3 und 5 verbunden. Auf diese Weise stellen die Leiterbahnen 8 und 9 Verbindungen zwischen den jeweiligen Anschlußleitungsabschnitten der Anschlußleitungen dar. Auf der Platine ist zwischen den Leiterbahnen ein SMD-Varistor 2 angeordnet. Dessen Anschlüsse sind direkt mit den Leiterbahnen 8 und 9 elektrisch verbunden. Wie durch die mit gestrichelten Linien angedeuteten Unterbrechungen der Anschlußleitungsabschnitte angedeutet ist, können diese auch deutlich größere Längen aufweisen, als sie in der Figur dargestellt sind. Sie können jedoch auch kürzer ausgeführt sein. Die Enden 15 der Anschlußleitungsabschnitte 5 und 6 stellen den Abgriff des Meßsignals des Temperatursensors dar.

An den Enden der Anschlußleitungen, die dem Abgriff 15 gegenüberliegen, ist die Umhüllung 10 dargestellt. Innerhalb der Umhüllung 10 ist ein KTY-Sensorelement 1 angeordnet. Es hat eine zylindrische Bauform, an dessen Stirnflächen jeweils ein Anschlußdraht angeordnet ist. Alternativ können jedoch auch andere Bauformen verwendet werden, insbesondere ein scheibenförmiges oder tropfenförmiges Element mit zwei Anschlußdrähten. Die Anschlußdrähte sind an Crimpstellen 11 und 12 jeweils mit einer Anschlußleitung verbunden. Die Crimpstellen sind dabei innerhalb der Umhüllung in axialer Richtung zueinander versetzt angeordnet. Insbesondere ist das KTY-Sensorelement gemäß Ziffer 1 zwischen den beiden Crimpstellen 11 und 12 angeordnet. Vorteilhaft ist die Umhüllung als Schrumpfschlauch ausgeführt, wodurch sie sich formgerecht und platzsparend an die Elemente anlegt, die in ihrem Inneren angeordnet sind. Vorteilhaft erstreckt sich ein solcher Schrumpfschlauch über einen so langen Abschnitt, z. B. 10 mm, über die Anschlußleitungen hinweg, dass der Schrumpfschlauch gleichzeitig als Knickschutz zum Schutz der Crimpstelle 10 dient. In Richtung des Endes des Temperatursensors steht die Umhüllung 10 vorteilhaft um eine Strecke von mindestens 5 mm über das Ende der Crimpstelle 12 über. Durch diesen Abstand ist die Crimpstelle 12 vor mechanischen Beschädigungen, gegen Berührungen sowie vor Überspannungen durch Anschlagen des Endes sicher geschützt. Die Enden der Umhüllung 10 können auf beiden Seiten offen, auf der Seite der Crimpstelle 12 aber auch geschlossen ausgeführt sein.

Die bevorzugte Verwendung des KTY-Sensorelement soll keine Einschränkung darstellen. Es können für die Zwecke der vorliegenden Erfindung auch andere Typen von Halbleiter-Temperatursensorelementen verwendet, sowohl mit positivem, als auch mit negativem Temperaturkoeffizienten.

## Patentansprüche

1. Temperatursensor, der ein Halbleiter-Sensorelement (1) und mindestens zwei Anschlussleitungen (3, 4, 5, 6, 8, 9) aufweist, wobei zu dem Halbleiter-Sensorelement (1) ein die Anschlussleitungen (3, 5, 9; 4, 6, 8) überbrückender Varistor (2) parallel geschaltet ist, **dadurch gekennzeichnet, dass** der Varistor (2) in einem Abstand von mindestens 20mm von dem Halbleiter-Sensorelement (1) angeordnet ist, wobei die Anschlussleitungen (3, 4, 5, 6, 8, 9) jeweils mindestens zwei Anschlussleitungsabschnitte (3, 5; 4 ,6) umfassen, die jeweils mit einer elektrischen Isolierung (13, 14) umgeben und jeweils elektrisch miteinander verbunden sind, wobei die umgebende elektrische Isolierung (13, 14) der Anschlussleitungen (3, 4, 5, 6) wenigstens am Übergang zwischen den Anschlussleitungsabschnitten (3, 4, 5, 6) unterbrochen ist und jeweils ein Anschluss des Varistors (2) an einer Stelle ohne elektrische Isolierung (13, 14) an jeweils einer der Anschlussleitungen (3, 4, 5, 6) elektrisch angeschlossen ist.

2. Temperatursensor nach Anspruch 1, **dadurch gekennzeichnet, dass** der Varistor (2) ein SMD-Element ist und auf einer Leiterplatte angeordnet ist.

3. Temperatursensor nach einem der vorangehenden Ansprüche, **dadurch gekennzeichnet, dass** der Varistor (2) auf einer Leiterplatte (7) angeordnet ist, die Leiterplatte (7) mit wenigstens zwei Anschlussleitungsabschnitten (3, 5; 4, 6) jeder Anschlussleitung (3, 5, 9; 4, 6, 8) verbunden ist, und der Varistor mit jeweils einem seiner Anschlüsse mit jeweils einer der Anschlussleitungen (3, 5; 4, 6) elektrisch verbunden ist.

4. Temperatursensor nach einem der vorangehenden Ansprüche, **dadurch gekennzeichnet, dass** der Temperatursensor an dem Ende, an dem sich das Halbleiter-Sensorelement (1) befindet, von einer im Wesentlichen rohr- oder schlauchförmigen Umhüllung (10) oder einem sonstigen starren oder flexiblen Gehäuse umgeben ist, in dessen Inneren das Halbleiter-Sensorelement (1) angeordnet ist.

5. Temperatursensor nach dem Anspruch 4, **dadurch gekennzeichnet,**
**dass** die Verbindungsstellen (11, 12) des Halbleiter-Sensorelements (1) mit den Anschlussleitungen (3, 4) innerhalb der Umhüllung (10) angeordnet sind.

6. Temperatursensor nach dem Anspruch 4, **dadurch gekennzeichnet, dass** der Varistor (2) innerhalb der Umhüllung (10) angeordnet ist.

7. Temperatursensor nach dem Anspruch 4, **dadurch gekennzeichnet, dass** der Varistor (2) außerhalb der Umhüllung (10) angeordnet ist.

8. Temperatursensor nach einem der vorangehenden Ansprüche, **dadurch gekennzeichnet, dass** die Anschlüsse des Halbleiter-Sensorelements (1) mit Crimpverbindungen (11, 12) mit den Anschlussleitungen (3, 4) verbunden sind.

9. Temperatursensor nach einem der vorangehenden Ansprüche, **dadurch gekennzeichnet, dass** der Varistor eine Temperaturbeständigkeit bis mindestens 150°C aufweist.

10. Temperatursensor nach einem der vorangehenden Ansprüche, **dadurch gekennzeichnet, dass** das Halbleiter-Sensorelement ein KTY-Sensorelement ist.

## Claims

1. Temperature sensor, which comprises a semiconductor sensor element (1) and at least two connection lines (3, 4, 5, 6, 8, 9), wherein a varistor (2), which bridges the connection lines (3, 5, 9; 4, 6, 8), is connected in parallel to the semiconductor sensor element (1), **characterized in that** the varistor (2) is arranged at a distance of at least 20 mm from the semiconductor sensor element (1), wherein the connection lines (3, 4, 5, 6, 8, 9) each comprise at least two connection line portions (3, 5; 4, 6), which each are surrounded by an electrical isolation (13, 14) and are each electrically connected to each other, wherein the surrounding electrical isolation (13, 14) of the connection lines (3, 4, 5, 6) is at least interrupted at the transition between the connection line portions (3, 4, 5, 6) and each a connector of the varistor (2) is electrically connected to one of each of the connection lines (3, 4, 5, 6) at a section without electrical isolation (13, 14).

2. Temperature sensor according to claim 1, **characterized in that** the varistor (2) is a SMD element and is arranged on a circuit board.

3. Temperature sensor according to one of the preceding claims, **characterized in that** the varistor (2) is arranged on a circuit board (7), the circuit board (7) is connected to at least two connection line portions (3, 5; 4, 6) of each of the connection lines (3, 5, 9; 4, 6, 8) and the varistor is connected electrically to one of each of the connection lines (3, 5; 4, 6) with one of each of its connectors.

4. Temperature sensor according to one of the preceding claims, **characterized in that** the temperature sensor at the end where the semiconductor sensor element (1) is located is surrounded by a generally tubular sheath (10) or another rigid or flexible casing, in the inside of which the semiconductor sensor element (1) is arranged.

5. Temperature sensor according to claim 4, **characterized in that** the junctions (11, 12) of the semiconductor sensor element (1) are arranged within the sheath (10) together with the connection lines (3, 4).

6. Temperature sensor according to claim 4, **characterized in that** the varistor (2) is arranged within the sheath (10).

7. Temperature sensor according to claim 4, **characterized in that** the varistor (2) is arranged outside of the sheath (10).

8. Temperature sensor according to one of the preceding claims, **characterized in that** the connectors of the semiconductor sensor element (1) are connected to the connection lines (3, 4) by means of crimp connections (11, 12).

9. Temperature sensor according to one of the preceding claims, **characterized in that** the varistor has a temperature resistance up to at least 150° C.

10. Temperature sensor according to one of the preceding claims, **characterized in that** the semiconductor sensor element is a KTY sensor element.

## Revendications

1. Capteur de température qui comprend un élément de capteur semi-conducteur (1) et au moins deux câbles de connexion (3, 4, 5, 6, 8, 9), une varistance (2) court-circuitant les câbles de connexion (3, 5, 9 ; 4, 6, 8) étant branché en parallèle par rapport à l'élément de capteur semi-conducteur (1), **caractérisé en ce que** la varistance (2) est disposée à une distance d'au moins 20 mm de l'élément de capteur semi-conducteur (1), les câbles de connexion (3, 4, 5, 6, 8, 9) comprenant chacun au moins deux portions de câbles de connexion (3, 5 ; 4, 6), qui sont entourées chacune d'une isolation électrique (13, 14) et reliées électriquement entre elles, l'isolation électrique (13, 14) des câbles de connexion (3, 4, 5, 6) étant interrompue au moins au niveau de la transition entre les portions de câbles de connexion (3, 4, 5, 6) et une connexion de la varistance (2) étant connectée électrique à un endroit sans isolation électrique (13, 14) au niveau d'un des câbles de connexion (3, 4, 5, 6).

2. Capteur de température selon la revendication 1, **caractérisé en ce que** la varistance (2) est un élément SMD et est disposée sur un circuit imprimé.

3. Capteur de température selon l'une des revendications précédentes, **caractérisé en ce que** la varistance (2) est disposée sur un circuit imprimé, le circuit imprimé (7) est relié avec au moins deux portions de câbles de connexion (3, 5 ; 4, 6) de chaque câble de connexion (3, 5, 9 ; 4, 6, 8) et la varistance est connectée électriquement avec une des connexions avec un des câbles de connexion (3, 5 ; 4, 6).

4. Capteur de température selon l'une des revendications précédentes, **caractérisé en ce que** le capteur de température est entouré, au niveau de l'extrémité, au niveau de laquelle se trouve l'élément de capteur semi-conducteur (1), par une enveloppe (10) tubulaire ou en forme de gaine ou par un boîtier rigide ou flexible, à l'intérieur duquel l'élément de capteur semi-conducteur (1) est disposé.

5. Capteur de température selon la revendication 4, **caractérisé en ce que** les points de liaison (11, 12) de l'élément de capteur semi-conducteur (1) sont disposés, avec les câbles de connexion (3, 4), à l'intérieur de l'enveloppe (10).

6. Capteur de température selon la revendication 4, **caractérisé en ce que** la varistance (2) est disposée à l'intérieur de l'enveloppe (10).

7. Capteur de température selon la revendication 4, **caractérisé en ce que** la varistance (2) est disposée à l'extérieur de l'enveloppe (10).

8. Capteur de température selon l'une des revendications précédentes, **caractérisé en ce que** les connexions de l'élément de capteur semi-conducteur (1) sont reliées, à l'aide de sertissages (11, 12), avec les câbles de connexion (3, 4).

9. Capteur de température selon l'une des revendications précédentes, **caractérisé en ce que** la varistance présente une résistance à la température jusqu'à au moins 150'C.

10. Capteur de température selon l'une des revendications précédentes, **caractérisé en ce que** l'élément de capteur semi-conducteur est un élément de capteur KTY.
